# EUROPÄISCHE PATENTANMELDUNG

(11) **EP 0 919 843 A1**
(43) Veröffentlichungstag der Anmeldung: **02.06.1999**
(21) Anmeldenummer: 98122188.0
(22) Anmeldetag: 26.11.1998
(51) Int. Cl.: G02B 6/44

(54) **Anschlussvorrichtung für Lichtwellenleiter**

(30) Priorität: 27.11.1997 DE 29720893 U
(71) Anmelder: BTR BLUMBERGER TELEFON- UND RELAISBAU ALBERT METZ, D-78176 Blumberg (DE)
(72) Erfinder: Jaag, Dieter, 78050 Villingen-Schwenningen (DE); Stadler,Hermann, 78166 Donaueschingen (DE)
(74) Vertreter: Patentanwälte Westphal, Mussgnug & Partner

(57) **Zusammenfassung**

Es wird eine Anschlußvorrichtung für Lichtwellenleiter (40A, 40B) beschrieben,
mit einem Unterteil (10) und einem Oberteil (20), die lösbar miteinander verbunden sind;
mit wenigstens einer zwischen Unterteil (10) und Oberteil (20) gebildeten Öffnung (44A, 44B, 44C) zur Zuführung wenigstens eines ersten Lichtwellenleiters (40A, 40B),
und mit wenigstens einem von dem Unterteil (10) aufgenommenen Kopplungselement (13) zur Kopplung eines von außen zugeführten zweiten Lichtwellenleiters an den ersten Lichtwellenleiter (40A, 40B), wobei der wenigstens eine erste Lichtwellenleiter (40A, 40B) auf einer in der Trennebene von Unterteil (10) und Oberteil (20) liegenden Oberfläche (19) von der wenigstens einen Zuführöffnung (44A, 44B, 44C) zu dem wenigstens einem Kopplungselement (13) geführt ist.

## Beschreibung

Die vorliegende Erfindung betrifft eine Anschlußvorrichtung für Lichtwellenleiter.

Aufgrund ihrer geringen räumlichen Abmessungen und ihrer extrem hohen Übertragungsraten finden Lichtwellenleiter zunehmend Verwendung in der Vernetzung von Daten- und Kommunikationssystemen. Hierbei ist eine einfache Handhabung beim Anschluß von Geräten mittels Lichtwellenleiter an ein Leitungsnetz aus Lichtwellenleitern unerläßlich. Ferner sollen nach Möglichkeit die in vielen Gebäuden vorhandenen Kabelschächte oder Leerrohre, die zum Verlegen von elektrischen Leitungen dienen, auch für die Verlegung von Lichtwellenleitern verwendet werden können.

Ziel der vorliegenden Erfindung ist es daher, eine Anschlußvorrichtung für Lichtwellenleiter zur Verfügung zu stellen, mittels derer Lichtwellenleiter beispielsweise von Endgeräten in einfacher Weise an Lichtwellenleiter ankoppelbar sind, die insbesondere in Kabelschächten oder Leerrohren verdeckt verlegt sind, und bei der eine einfache Installation gewährleistet ist.

Dieses Ziel wird erfindungsgemäß durch eine Anschlußvorrichtung mit den Merkmalen des Patentanspruchs 1 erreicht.

Vorteilhafte Ausführungen der Erfindung sind in den Unteransprüchen gekennzeichnet.

Die Anschlußvorrichtung ist in eine Leerdose einsetzbar und damit platzsparend und unauffällig in bestehende Installationssysteme integrierbar. Zur einfachen Installation verfügt sie über ein Oberteil und ein Unterteil, die lösbar miteinander verbunden sind und zwischen denen wenigstens eine Öffnung zur Zuführung wenigstens eines ersten Lichtwellenleiters gebildet ist. Ober- und Unterteil bilden in zusammengesetztem Zustand ein Gehäuse, in dem sich wenigstens ein an Unter- oder Oberteil angebrachtes Kopplungselement zum Anschluß des ersten Lichtwellenleiters befindet. Lichtwellenleiter sind an ihrem Ende üblicherweise mit einem Verbinderelement konfektioniert, dessen Durchmesser den Durchmesser des Lichtwellenleiters bei weitem übersteigt. Durch Lösen von Ober- und Unterteil läßt sich das Verbinderelement auf einfache Weise in das Gehäuse einbringen und mit dem Kopplungselement verbinden. Für die zwischen Ober- und Unterteil befindliche wenigstens eine Zuführöffnung ist lediglich ein Durchmesser erforderlich, der in der Größenordnung des Durchmessers des Lichtwellenleiters liegt, wobei Lichtwellenleiter eine oder mehrere Glasfasern, einschließlich deren Ummantelung bezeichnet.

Der wenigstens eine Lichtwellenleiter wird vorzugsweise in der Trennebene von Oberteil und Unterteil von der Zuführöffnung zu dem Kopplungselement geführt. Dadurch kann der Lichtwellenleiter einfach in das geöffnete Gehäuse eingelegt werden. Insbesondere werden dadurch auch schädliche Knickbeanspruchungen des Lichtwellenleiters vermieden. Der knickfreie Verlauf des Lichtwellenleiters in dem Gehäuse kann zusätzlich noch durch Führungen sichergestellt werden, die an dem Oberteil oder dem Unterteil ausgeformt sind und in die Trennebene hineinragen.

Die Anschlußvorrichtung ist vollständig in eine Leerdose einsetzbar, wobei vorzugsweise eine Abdeckung das in die Leerdose eingesetzte Ober- und Unterteil abschließt. Das Kopplungselement ragt an einem Ende aus dem durch Unter- und Oberteil gebildeten Gehäuse heraus und ist durch eine Öffnung der Abdeckung zum Anschluß eines zweiten Lichtwellenleiters zugänglich. Der zweite von außen zugeführte Lichtwellenleiter kann so über das Kopplungselement mit dem der Anschlußvorrichtung zugeführten, verdeckt verlegten ersten Lichtwellenleiter verbunden werden.

Vorzugsweise sind zwischen Ober- und Unterteil drei Zuführöffnungen gebildet, die sich an unterschiedlichen Seiten der Anschlußvorrichtung befinden. Die Anschlußvorrichtung ist damit sehr flexibel hinsichtlich der Zuführung des ersten Lichtwellenleiters. Ein einfaches Verbinden und Lösen von Ober- und Unterteil ergibt sich durch das Vorsehen von Rastvorrichtungen, die vorzugsweise als Rasthaken und Rastaussparungen oder Rastnasen ausgebildet sind und die zum Verbinden von Ober- und Unterteil ineinander eingreifen.

Das an dem Ober- oder Unterteil angebrachte Kopplungselement weist Kupplungen auf, um den wenigstens einen der Anschlußvorrichtung durch die Zuführöffnung zugeführten ersten Lichtwellenleiter mit dem zweiten von außen durch die Öffnung der Abdeckung zugeführten Lichtwellenleiter zu verbinden. Die Kupplungen sind vorzugsweise mit Steckansätzen ausgebildet, auf die die Verbinderelemente des ersten und zweiten Lichtwellenleiters aufsteckbar sind, wobei Verbinderelemente und Steckansätze vorzugsweise bajonettartig ineinander einrastbar sind.

Das Kopplungselement ist vorzugsweise derart angeordnet, daß der von außen zugeführte zweite Lichtwellenleiter ausgehend von der Anschlußvorrichtung schräg zur Ebene der Abdeckung verläuft. Da die Anschlußvorrichtung üblicherweise in einer Wand des Raumes installiert wird, verläuft dadurch der außen angeschlossene zweite Lichtwellenleiter ausgehend von der Anschlußvorrichtung schräg nach unten, so daß seine Biegebeanspruchung und damit der Verschleiß und die Ausfallgefahr verringert sind, wenn er unterhalb der Anschlußdose an den Boden oder die Wand geführt wird. Die schräge Anordnung, vorzugsweise unter etwa 45°, bedeutet auch einen geringeren Platzbedarf für den von der Anschlußvorrichtung laufenden zweiten Lichtwellenleiter. Bei einer solchen Anordnung ergibt sich damit auch eine Neigung der Trennebene zwischen Unterteil und Oberteil von 45° gegen die Abdeckung bzw. die Wandfläche.

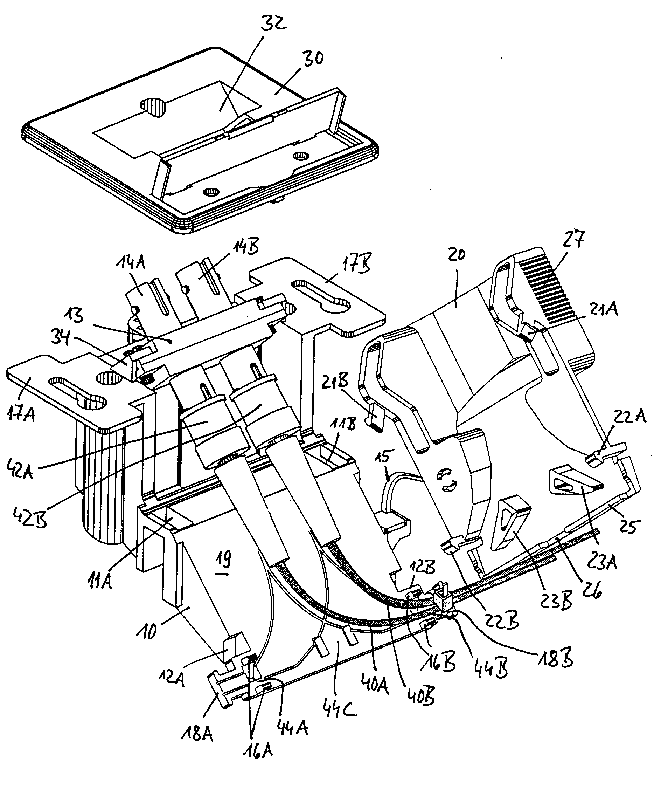

Die Erfindung wird nachfolgend anhand eines in der beigefügten Zeichnung dargestellten Ausführungsbeispiels näher erläutert.

In der einzigen Figur ist eine Anschlußvorrichtung für Lichtwellenleiter dargestellt mit einem Unterteil 10, einem Oberteil 20, einer Abdeckvorrichtung 30 und mit zwei zugeführten ersten Lichtwellenleitern 40A, 40B in geöffnetem Zustand, wobei das Oberteil 20 gegen das Unterteil 10 um 90° um die rechte Seitenkante des Unterteils 10 hochgeklappt ist. Unter- und Oberteil 10, 20 sind im wesentlichen einstückig, insbesondere als Kunststoffspritzteile aus schlagfestem Kunststoff ausgebildet.

Unter- und Oberteil 10, 20 sind mittels Rastvorrichtungen 11A, 12A, 11B, 12B, 21A, 22A, 21B, 22B lösbar miteinander verbindbar. In verrastetem Zustand sind das Unter- und Oberteil 10, 20 in eine, beispielsweise in einer Wand eingelassenen Leerdose einsetzbar. Hierzu weist das Unterteil 10 Ansätze 17A, 17B auf, mittels derer die zusammengesetzte Vorrichtung in der Leerdose befestigbar ist.

An dem Oberteil 20 sind vier Rasthaken 21A, 21B, 22A, 22B angeformt, die zum Verbinden des Unter- und Oberteils 10, 20 in Rastaussparungen 11A, 11B bzw. Rastnasen 12A, 12B des Unterteils 10 eingreifen. Zur besseren Handhabung des Oberteils 20 beim Zusammensetzen besitzt dieses geriffelt ausgebildete Seitenbereiche 27. Das Unterteil 10 und das Oberteil 20 sind durch eine flexible Lasche 15 auch in getrenntem Zustand unverlierbar miteinander verbunden.

Das Unterteil 10 weist einen Flansch 34 auf, in welchen ein Kopplungselement 13 eingesetzt ist, welches zwei Kupplungen 14A und 14B zum Aufstecken von Verbinderelementen 42A, 42B von Lichtwellenleitern 40A, 40B aufweisen. Die inneren Steckansätze der Kupplungen 14A, 14B ragen hierbei in das Innere des aus Unterteil 10 und Oberteil 20 gebildeten Gehäuses. Die äußeren Steckansätze der Kupplungen 14A, 14B sind bei eingebauter Anschlußvorrichtung von außen zugänglich, wobei der Zugang über eine Öffnung 32 einer Abdeckung 30 erfolgt, die in eingebautem Zustand an dem Unterteil 10 befestigbar ist. Die inneren Steckansätze der Kupplungen 14A, 14B dienen dem Anschluß von ersten Lichtwellenleitern 40A, 40B eines in dem Gebäude verlegten Daten- und/oder Kommuikationssystems, die beispielsweise in Leerrohren verlegt sind und in die Anschlußvorrichtung eingeführt sind. An die äußeren Steckansätze der Kopplungen 14A, 14B sind, hier nicht dargestellte, zweite Lichtwellenleiter z. B. eines Endgerätes anschließbar und mit den ersten Lichtwellenleitern 40A, 40B verbindbar. Sowohl die ersten Lichtwellenleiter 40A, 40B als auch die zweiten Lichtwellenleiter sind mittels Verbinderelementen 42A, 42B an die Kupplungen 14A, 14B anschließbar.

Die Mittelachse der Kupplungen 14A, 14B verläuft in dem dargestellten Beispiel unter 45° schräg bezüglich der Ansätze 17A, 17B, bezüglich der Abdeckung 30 und somit bezüglich der Wand, in welche die die Anschlußvorrichtung aufnehmende Leerdose eingesetzt ist. Die von außen zugeführten, an die Kupplungen 14A, 14B anschließbaren zweiten Lichtwellenleiter können so ausgehend von der Anschlußvorrichtung schräg nach unten führend verlegt werden.

Eine in der Trennebene von Unterteil 10 und Oberteil 20 liegende Oberfläche 19 des Unterteils 10 ist entsprechend der Neigung der Kopplungselemente 14 schräg ausgebildet, um die Lichtwellenleiter 40A, 40B, die auf dieser Oberfläche 19 aufliegen, den Kupplungen 14A, 14B knickfrei zuzuführen.

Die ersten Lichtwellenleiter 40A, 40B werden der Anschlußvorrichtung über Zuführöffnungen 44A, 44B, 44C zugeführt, die sich bei zusammengesetztem Unter- und Oberteil 10, 20 zwischen diesen ergeben. Zwei seitliche Zuführöffnungen 44A, 44B sind im Bereich der Rastvorsprünge 12A, 12B durch senkrecht auf der Oberfläche 19 des Unterteils 10 angeformte Distanzelemente 16A, 16B und die seitlichen Kanten des Oberteils 20 gebildet. Eine weitere Zuführöffnung 44C ergibt sich in zusammengesetztem Zustand aus der Oberfläche 19 des Unterteils 10 und einer mittigen Aussparung 26 der rückwärtigen Kante 25 des Oberteils 20. Die Zuführung der Lichtwellenleiter 40A, 40B ist über jede der drei beschriebenen Zuführöffnungen 44A, 44B, 44C möglich, wobei die Lichtwellenleiter 40A, 40B über verschiedene Zuführöffnungen oder auch wie in dem dargestellten Beispiel gemeinsam über dieselbe Zuführöffnung zugeführt werden können. Das Unterteil 10 ist im Bereich der Rastvorsprünge 12A, 12B mit T-förmigen Verlängerungen 18A, 18B ausgebildet, an welchen die zugeführten Lichtwellenleiter 40A, 40B mittels eines Kabelbinders befestigbar sind.

Das Oberteil 20 besitzt ferner Führungsansätze 23A, 23B, die in zusammengesetztem Zustand auf der Oberfläche 19 des Unterteils 10 aufsitzen. Durch die Führungsansätze 23A, 23B ergeben sich Führungskanäle für die Lichtwellenleiter 40A, 40B von den Zuführöffnungen 44A, 44B, 44C zu den Kupplungen 14A, 14B, die gewährleisten, daß die Lichtwellenleiter 40A, 40B auf der Oberfläche 19 mit dem größtmöglichen Biegeradius und damit der geringsten Biegebeanspruchung fixiert und geführt sind.

### Bezugszeichen

- 10: Unterteil
- 11A, 11B: Rastaussparungen
- 12A, 12B: Rastnasen
- 13: Kopplungselement
- 14A, 14B: Kupplungen
- 15: Lasche
- 16A, 16B: Distanzelemente
- 17A, 17B: Ansätze
- 18A, 18B: T-förmige Verlängerungen
- 19: Oberfläche
- 20: Oberteil
- 21A, 21B, 22A, 22B: Rasthaken
- 23A, 23B: Führungsansätze
- 25: rückwärtige Kante
- 26: Aussparungen
- 27: geriffelter Bereich
- 30: Abdeckung
- 32: Öffnung
- 34: Flansch
- 40A, 40B: Lichtwellenleiter
- 42A, 42B: Verbinderelement
- 44A, 44B, 44C: Zuführöffnungen

## Patentansprüche

1. Anschlußvorrichtung für Lichtwellenleiter (40A, 40B), mit einem Unterteil (10) und einem Oberteil (20), die lösbar miteinander verbunden sind;
mit wenigstens einer zwischen Unterteil (10) und Oberteil (20) gebildeten Öffnung (44A, 44B, 44C) zur Zuführung wenigstens eines ersten Lichtwellenleiters (40A, 40B),
und mit wenigstens einem von dem Unterteil (10) aufgenommenen Kopplungselement (13) zur Kopplung eines von außen zugeführten zweiten Lichtwellenleiters an den ersten Lichtwellenleiter (40A, 40B), wobei der wenigstens eine erste Lichtwellenleiter (40A, 40B) auf einer in der Trennebene von Unterteil (10) und Oberteil (20) liegenden Oberfläche (19) von der wenigstens einen Zuführöffnung (44A, 44B, 44C) zu dem wenigstens einem Kopplungselement (13) geführt ist.

2. Anschlußvorrichtung nach Anspruch 1, dadurch gekennzeichnet, daß das Kopplungselement (13) wenigstens eine Kupplung (14A, 14B) aufweist, die mit einem inneren Steckansatz in ein aus Unter- und Oberteil (10, 20) gebildetes Gehäuse hineinragt und mit einem äußeren Steckansatz von außen zugänglich ist.

3. Anschlußvorrichtung nach einem der vorangehenden Ansprüche, dadurch gekennzeichnet, daß an Unter- oder Oberteil (10, 20) eine Abdeckung (30) befestigbar ist, die eine Öffnung (32) für das wenigstens eine Kopplungselement (13) aufweist.

4. Anschlußvorrichtung nach einem der vorangehenden Ansprüche, dadurch gekennzeichnet, daß zwei seitliche Zuführöffnungen (44A, 44B) und eine rückwärtige Zuführöffnung (44C) vorgesehen sind.

5. Anschlußvorrichtung nach einem der vorhergehenden Ansprüche, dadurch gekennzeichnet, daß ausgehend von den Zuführöffnungen (44A, 44B, 44C) Führungskanäle zu dem Kopplungselement (13) für den wenigstens einen ersten Lichtwellenleiter (40A, 40B) ausgebildet sind.

6. Anschlußvorrichtung nach dem Anspruch 5, dadurch gekennzeichnet, daß die Führungskanäle durch Führungsansätze (23A, 23B) gebildet sind, die auf der den wenigstens einen ersten Lichtwellenleiter (40A, 40B) tragenden Oberfläche (19) aufsitzen.

7. Anschlußvorrichtung nach einem der vorangehenden Ansprüche, dadurch gekennzeichnet, daß Unter- und Oberteil (10, 20) Rastvorrichtungen (11A, 11B, 12A, 12B, 21A, 21B, 22A, 22B) zum lösbaren Verbinden von Unter- und Oberteil (10, 20) aufweisen.

8. Anschlußvorrichtung nach einem der vorangehenden Ansprüche, dadurch gekennzeichnet, daß das wenigstens eine Kopplungselement (13) wenigstens eine steckbare Kupplung (14A, 14B) für die Lichtwellenleiter aufweist und daß die Achse der Kupplung (14A, 14B) im wesentlichen in der Ebene der den wenigstens einen ersten Lichtwellenleiter tragenden Oberfläche (19) liegt.

9. Anschlußvorrichtung nach Anspruch 8, dadurch gekennzeichnet, daß das die Achse der wenigstens einen Kupplung (14A, 14B) schräg, vorzugsweise unter 45°, zu der Ebene der Wand angeordnet ist, an welcher die Anschlußvorrichtung befestigbar ist.

10. Vorrichtung nach einem der vorangehenden Ansprüche, dadurch gekennzeichnet, daß die Abmessungen der Anschlußvorrichtung an eine Unterputzleerdose angepaßt sind.

11. Anschlußvorrichtung nach einem der vorangehenden Ansprüche, dadurch gekennzeichnet, daß Unter- und Oberteil (10, 20) über ein flexible Lasche (15) unverlierbar miteinander verbunden sind.
